# EUROPÄISCHE PATENTANMELDUNG

(11) **EP 4 406 729 A1**
(43) Veröffentlichungstag der Anmeldung: **31.07.2024**
(21) Anmeldenummer: 23153581.6
(22) Anmeldetag: 27.01.2023
(51) Int. Cl.: B29C 73/02, B05D 3/06, B05D 5/00, B27N 7/00, B29C 35/08

(54) **VERFAHREN ZUR AUSBESSERUNG VON FEHLSTELLEN IN PANEELEN**

(71) Anmelder: KNEHO-LACKE GmbH, 32805 Horn-Bad Meinberg (DE)
(72) Erfinder: Dinkelborg, Bernd, Horn-Bad Meinberg (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Verfahren zur Ausbesserung von Fehlstellen in Paneelen sowie ein Reparaturset zur Ausführung des erfindungsgemäßen Verfahrens.

## Beschreibung

Die vorliegende Erfindung betrifft ein Verfahren zur Ausbesserung von Fehlstellen in Paneelen sowie ein Reparaturset zur Ausführung des erfindungsgemäßen Verfahrens.

Paneele sind Holztafeln oder furnierte Platten für die Verkleidung von Innenräumen, die sich insbesondere in Form von Parkett oder Laminat als Fußbodenbelag großer Beliebtheit erfreuen. Gerade bei der Verwendung als Fußbodenbelag sind die Paneele einer großen Belastung ausgesetzt und es kann leicht zu Beschädigungen der Paneele kommen. Darüber weisen Paneele aus Holz häufig Fehlstellen, beispielsweise von Astlöchern oder Astansätzen, auf, die die Qualität eines ansonsten hochwertigen Fußbodenbelags, beispielsweise Parkett, beeinträchtigen können.

Es gibt eine Reihe von Produkten, die zur Ausbesserung und Reparatur von Fehlstellen und Beschädigungen in Paneelen verwendet werden können. So sind beispielsweise farbige Wachse kommerziell erhältlich, die zur Behandlung einer Schadstelle eingesetzt werden können. Dazu müssen jedoch zunächst lose Teile von der Fehlstelle gelöst werden und dann ein Wachs im passenden Farbton ausgewählt werden. Hier ist die farbliche Abstimmung zwischen Wachs und Paneel besonders wichtig und insofern schwierig, als dass sich die reparierte Schadstelle optisch wieder in das Gesamtbild einfügen muss. Wenn das passende Wachs ausgewählt ist, muss dieses in die Schadstelle eingebracht werden. Hier stellt sich das nächste Problem, da die Wachse meist in Form von Stangen vorliegen, so dass die Bestimmung der richtigen Menge schwierig ist. Ist das Wachs in die Schadstelle gedrückt, muss überschüssiges Material in der Regel abgezogen werden, was wiederum ein gewisses handwerkliches Geschick voraussetzt. Anschließend muss das Wachs trocknen und aushärten bevor die Stelle je nach Bedarf versiegelt werden kann. Diese Verfahren sind der Regel zeit- und arbeitsintensiv, so dass weiterhin der Bedarf nach einem vereinfachten Verfahren zur Ausbesserung von Fehl- und Schadstellen in Paneelen besteht.

DE 9312302.7 beschreibt eine Masse zum Verschließen und/oder Glätten eines Basismaterials, das an seiner Oberfläche Unregelmäßigkeiten wie Löcher, Risse und Unebenheiten aufweist, wobei die Masse unter der Einwirkung eines äußeren physikalischen Mittels, wie beispielsweise einer UV-Strahlung härten kann, und die ein Bindemittel, ein im Bindemittel dispergiertes Füllmaterial, das zumindest einen Bestandteil, ausgewählt aus einem inerten festen Material, einer Farbe und einem Pigment enthält, sowie einen Photopolymerisationsstarter aufweist, wobei das Bindemittel photochemisch polymerisierbar und insbesondere photochemisch vernetzbar ist und es bei relativ geringer Schichtdicke quasi augenblicklich polymerisieren kann.

DE 35 21 382 betrifft ein Reparaturset für beschädigte Kunststoff-Formteile, bestehend aus A. einem verformbaren Laminat, welches ein ungesättigtes Polyesterharz, Monomere, einen Lichtinitiator und ein textiles Fasergebinde enthält und beidseitig mit Deckfolie belegt ist, B. einer Faserspachtelmasse, welche ein ungesättigtes Polyesterharz, Monomere, einen Lichtinitiator und Kurzglasfasern enthält, sowie gegebenenfalls C. einer Füllstoffspachtelmasse, welche ein ungesättigtes Polyesterharz, Monomere, einen Lichtinitiator und transparente Füllstoffe enthält, wobei die Komponenten A, B und gegebenenfalls C - jeweils voneinander getrennt - flächig in einen licht- und monomerundurchlässigen Folienbeutel eingesiegelt sind.

DE 10 2007 016 595 offenbart eine umweltfreundliche Spachtelmasse, die ein Bindemittel, Wasser sowie mindestens einen Füllstoff enthält, wobei das Bindemittel mindestens ein wasserverdünnbares und/oder wasseremulgierbares Alkydharz ist.

Weitere Produkte, die für die genannten Zwecke eingesetzt werden können, sind Spachtelmassen, die sich je nach Aufbau und Zusammensetzung in unterschiedliche Kategorien einteilen lassen.

2K-Spachtelmassen bestehen in der Regel aus einer pastösen und einer flüssigen Komponente, die vor Gebrauch in einem bestimmten Mischungsverhältnis angemischt werden müssen. Das Zusammenmischen im richtigen Verhältnis birgt eine Reihe von Risiken und Schwierigkeit, die vom Umgang mit potentiellen Gefahrenstoffen, Kobalt, Peroxid und Styrol, bis hin zum Erzeugen einer homogenen Mischung reichen. Darüber hinaus weisen 2K-Spachtelmassen in der Regel nur eine kurze Topfzeit auf, wodurch sie schnell unbrauchbar werden.

2K-UV-Spachtelmassen bestehen aus ähnlichen Komponenten wie die 2K-Spachtelmassen. Durch Bestrahlung mit UV-Strahlung kann eine dünne "Haut" erzeugt werden, sodass die mit der Spachtelmasse behandelten Teile händisch oder maschinell aufeinander ab gestapelt werden können und die Bauteile so bis zur Endaushärtung gelagert werden können.

2K-Spachtelmassen weisen darüber hinaus den Nachteil auf, dass eine maschinelle Verarbeitung technisch in der Regel nicht möglich.

UV-Spachtelmassen als 1-Komponentensysteme können zwar gebrauchsfertig zur Verfügung gestellt werden, weisen aber in der Regel optische Nachteile wie eine Trübung auf. Solche UV-Spachtelmassen werden insbesondere im Automobilsektor eingesetzt und sind für metallische Untergründe optimiert. Eine Anwendung auf nicht-metallischen Materialien, wie beispielsweise Holz, ist daher meist nicht möglich. Darüber hinaus ist die Aushärttiefe in der Regel auf wenige Millimeter begrenzt.

Vor diesem Hintergrund liegt die Aufgabe der vorliegenden Erfindung in der Bereitstellung eines Verfahrens zur Ausbesserung von Fehlstellen in Paneelen, das insbesondere eine zeitnahe Weiterverarbeitung der Paneele erlaubt. Weiterhin ist es wünschenswert, dass sich durch das Verfahren ein erhöhter Schutzfaktor erzielen lässt, so dass beispielsweise das Eindringen von Wasser oder weitere Beschädigungen vermieden werden können.

Daher ist ein erster Gegenstand der vorliegenden Erfindung ein Verfahren zur Ausbesserung von Fehlstellen in Paneelen, bei dem die Fehlstelle mit einer Reparaturspachtelmasse gefolgt von einem Behandlungsmittel behandelt und die behandelte Fehlstelle mit UV-Strahlung bestrahlt wird.

Es wurde überraschend gefunden, dass das erfindungsgemäße Verfahren eine einfache und unkomplizierte Alternative zur Ausbesserung von Fehlstellen in Paneelen darstellt, bei dem insbesondere die mechanischen und chemischen Beständigkeiten der reparierten Schadstelle und auch der Glanzgrad vergleichbar zur übrigen Oberfläche ausgebildet sind. Als weiterer Vorteil hat sich überraschend gezeigt, dass das Verfahren dank der erreichten Tiefenhärtung von bis zu 1 cm, ohne dass nicht ausgehärtetes Material im Untergrund verbleibt, auch für tiefe Fehlstellen verwendet werden kann, die mit herkömmlichen Verfahren nicht ausgebessert werden können.

Bei den Fehlstellen kann es sich insbesondere um Risse und Astlöcher aber auch Schadstellen im Paneel handeln, die natürlichen oder nicht-natürlichen Ursprungs sein können, wie sie beispielsweise durch Beschädigungen der Oberfläche oder Bohrlöcher entstehen. Im Rahmen der vorliegenden Erfindung wird auf eine Unterscheidung zwischen Fehl- und Schadstellen verzichtet, sofern nicht anders angegeben.

Im Rahmen des erfindungsgemäßen Verfahrens wird die Fehlstelle zunächst mit einer Reparaturspachtelmasse behandelt, beispielsweise verfüllt. Die Reparaturspachtelmasse kann vorteilhaft mit Hilfe eines Applikators aufgebracht werden, beispielsweise einer Kartuschenpresse, was den Vorteil einer einfachen und genauen Dosierung der benötigen Menge erlaubt. Diese Methode der Aufbringung weist gegenüber dem klassischen Spachtel weiterhin den Vorteil auf, dass Beschädigungen der Spachtelmasse, beispielsweise durch fehlerhafte Haltung des Spachtels, vermieden werden können.

Nach Verfüllen der Fehlstelle kann, falls notwendig, überschüssige Reparaturspachtelmasse entfernt werden. In einer bevorzugten Ausführungsform des erfindungsgemäßen Verfahrens wird die ausgebrachte Reparaturspachtelmasse mit einem Abziehmittel behandelt, um das Nivellieren zu erleichtern und ein Verschmieren der Reparaturspachtelmasse zu verhindern. In einer bevorzugten Ausführungsform weist das optional eingesetzte Abziehmittel Wasser, einen oder mehrere Alkohole und eine Reinigungssubstanz auf wässriger Basis, vorzugsweise Seife, auf.

In einer bevorzugten Ausführungsform umfasst das erfindungsgemäße Verfahren die folgenden Schritte:
a) Aufbringen einer Reparaturspachtelmasse auf die Fehlstelle;
b-1) gegebenenfalls Aufbringen eines Abziehmittels auf die Reparaturspachtel masse;
b-2) gegebenenfalls Nivellieren der Reparaturspachtelmasse;
c) Aufbringen eines Behandlungsmittels auf die Reparaturspachtelmasse; und
d) Bestrahlen der derart behandelten Fehlstelle mit UV-Strahlung.

Das erfindungsgemäße Verfahren zeichnet sich insbesondere durch seine einfache Ausführung aus. Daher ist eine Ausführungsform bevorzugt, in der das Aufbringen des Behandlungsmittels und/oder des Abziehmittels mittels Sprühens erfolgt.

Weiterhin ist in diesem Zusammenhang eine Ausführungsform bevorzugt, in der das Behandlungsmittel und/oder das Abziehmittel sprühbar sind.

Die Reparaturmasse dient in erster Linie zum Verfüllen der Fehlstelle und sollte möglichst schnell aushärten, so dass das ausgebesserte Paneel zeitnah weiterverarbeitet beziehungsweise betreten oder gestapelt werden kann. Im Rahmen der vorliegenden Erfindung wurde überraschend gefunden, dass sich insbesondere UV-härtbare Produkte diesbezüglich als vorteilhaft erwiesen haben. Daher ist eine Ausführungsform bevorzugt, in der es sich bei der Reparaturspachtelmasse um eine 1K-Spachtelmasse, vorzugsweise auf Polymerbasis mit Photoinitiator, handelt. Die Reparaturspachtelmasse liegt vorzugsweise als Ein-Komponenten-Masse vor, was den Vorteil hat, dass sie nicht angemischt werden muss und direkt auf die Fehlstelle aufgetragen werden kann. Die Verwendung einer UV-härtbaren Reparaturspachtelmasse erlaubt darüber hinaus eine schnelle Weiterverarbeitung des behandelten Paneels, ohne dass die lange Trocknungszeit herkömmlicher 1K-Spachtelmassen abgewartet werden muss.

Die eingesetzte 1K-Reparaturspachtelmasse weist weiterhin den Vorteil einer guten Umweltverträglichkeit und gesundheitlichen Unbedenklichkeit auf, da sie im Gegensatz zu herkömmlichen 2K-Spachtelmassen frei von Styrol und anderen gesundheitlich bedenklichen Verbindungen ist. In einer weiterhin bevorzugten Ausführungsform ist die verwendete Reparaturspachtelmasse transparent und/oder farblos. In einer besonders bevorzugten Ausführungsform weist die Reparaturspachtelmasse, insbesondere nach dem Aushärten, eine Transmission von sichtbarem Licht von wenigstens 95%, bevorzugt 99% oder mehr auf und ist insbesondere glasklar. Auf diese Weise passt sich die Reparaturspachtelmasse farblich dem Untergrund an und eine aufwendige farbliche Abstimmung, wie beim Einsatz herkömmlicher Wachse, entfällt. In einer weiterhin bevorzugten Ausführungsform ist die Reparaturspachtelmasse wasserfrei, wobei der Anteil an Wasser in der Reparaturspachtelmasse vorzugsweise weniger als 1 Gew.-%, besonders bevorzugt weniger als 0,5 Gew.-% und insbesondere weniger als 0,1 Gew.-% beträgt, jeweils bezogen auf das Gesamtgewicht der Reparaturspachtelmasse. Es hat sich überraschend gezeigt, dass im Gegensatz zu herkömmlichen 1K wasserbasierten Reparaturspachtelmassen die erfindungsgemäß verwendete Reparaturspachtelmasse frei von Schrumpf oder Beifallen ist.

In einer bevorzugten Ausführungsform umfasst die erfindungsgemäß eingesetzte Reparaturspachtelmasse ein Polymer, das vorzugsweise ausgewählt ist aus der Gruppe der Epoxy-Acrylate, Polyurethane und Polyester-Acrylate sowie Mischungen hiervon.

In einer weiterhin bevorzugten Ausführungsform weist die Reparaturspachtelmasse weiterhin Verstärkungsfasern auf. Vorzugsweise wird eine Reparaturspachtelmasse eingesetzt, die, jeweils bezogen auf das Gesamtgewicht der Reparaturspachtelmasse,
a) 20 bis 50 Gew.-% eines UV-härtbaren Polymers oder Polymergemischs;
b) optional 5 bis 30 Gew.-% Verstärkungsfasern, und
c) 0,1 bis 5 Gew.-% eines Photoinitiators
aufweist.

Die Verstärkungsfasern können beispielsweise ausgewählt sein aus der Gruppe bestehend aus Kohlenstofffasern, Silikatfasern, Polymerfasern, Cellulosefasern, Keramikfasern und Aramidfasern, wobei Silikatfasern besonders bevorzugt sind.

Die ausgebrachte Reparaturspachtelmasse wird erfindungsgemäß mit einem Behandlungsmittel behandelt, vorzugsweise besprüht. Vorzugsweise umfasst das Behandlungsmittel Wasser, einen oder mehrere Alkohole und eine Reinigungssubstanz auf wässriger Basis, vorzugsweise Seife. Ohne an eine bestimmte Theorie gebunden zu sein, wird angenommen, dass durch das Behandlungsmittel ein Schutzfilm auf der Reparaturspachtelmasse ausgebildet wird, der Verschmutzungen und insbesondere Sauerstoff fernhält und so die Aushärtung mittels UV-Strahlung erleichtert. Es wurde überraschend gefunden, dass so auch bei komplizierten Fehlstellen eine flächendeckende Schutzwirkung erreicht werden kann.

Im Rahmen der vorliegenden Erfindung wurde überraschend gefunden, dass Abziehmittel und Behandlungsmittel kombiniert werden können. Daher ist eine Ausführungsform bevorzugt, in der das Behandlungsmittel auch als Abziehmittel verwendet wird. Auf diese Weise kann eine Substanz eingespart werden.

Nach Aufbringen des Behandlungsmittels wird die behandelte Fehlstelle mit UV-Strahlung bestrahlt, um die Aushärtung der Reparaturspachtelmasse zu initiieren. Hierbei wurde überraschend gefunden, dass die Bestrahlung ausreichend ist, um eine vollständig ausgehärtete Oberfläche zu erzielen und eine garantierte Tiefenhärtung von 10 mm in den Fehlstellen in Millisekunden zu generieren. Auf diese Weise kann eine vollständig trockene Oberfläche erreicht werden, was eine schnelle Weiterverarbeitung und/oder erneute Ausbesserung ermöglicht.

Im Rahmen des erfindungsgemäßen Verfahrens wird die behandelte Fehlstelle mit UV-Strahlung bestrahlt, um ein Aushärten der Reparaturspachtelmasse zu erreichen. Hierbei wurde überraschend gefunden, dass die Aushärtung der Reparaturspachtelmasse auch durch die Bestrahlung mit LED-UV-Strahlung erreicht werden kann, was den Vorteil eines geringeren Energieaufwands und einer vereinfachten Handhabung bietet. Daher ist eine Ausführungsform bevorzugt, in der die Bestrahlung der behandelten Fehlstelle mittels LED-UV-Strahlung erfolgt.

Durch die Ausbesserung gemäß dem erfindungsgemäßen Verfahren lässt sich ein optisches Ergebnis erzielen, dass sich in das Gesamtbild des Paneels einfügt. So wird unter anderem ein Glanzgrad der ausgebesserten Fehlstelle erreicht, der sich nicht oder nur geringfügig von dem des umgebenen Paneels unterscheidet. Daher ist eine Ausführungsform bevorzugt, in der die ausgebesserte Fehlstelle nach dem Bestrahlen einen Glanzgrad von 25 bis 30 Punkten aufweist, wobei der Glanzgrad mit einem Glanzgradmessgerät gemäß DIN 67530/60° bestimmt werden kann. Um einen geringeren Glanzgrad zu generieren, kann mit einem Polierfilz die Oberfläche mattiert werden und je nach Bedarf ein Pflegemittel aufgebracht werden. An das Pflegemittel sind keine besonderen Anforderungen zu stellen. So können beispielsweise handelsübliche Produkte verwendet werden. Vorzugsweise handelt es sich bei dem Pflegemittel um eine Wachsmischung.

Das erfindungsgemäße Verfahren ist besonders für die Ausbesserung von Fehl- und Schadstellen in Holzpaneelen geeignet, aber nicht auf diese beschränkt. Daher ist eine Ausführungsform bevorzugt, in der es sich bei dem Paneel um ein Paneel aus Holz, Kunststoff oder Faserverbundstoff handelt.

Ein weiterer Gegenstand der vorliegenden Erfindung ist ein Reparaturset zur Ausbesserung einer Fehlstelle in einem Paneel umfassend:
i) eine Reparaturspachtelmasse,
ii) ein Behandlungsmittel, und
iii) eine LED-Strahlungsquelle.

Das Reparaturset wird vorzugsweise zur Durchführung des erfindungsgemäßen Verfahrens verwendet. Entsprechend handelt es sich bei der Reparaturspachtelmasse und dem Behandlungsmittel vorzugsweise um solche wie im Zusammenhang mit dem erfindungsgemäßen Verfahren beschrieben.

Als Strahlungsquelle eignet sich vorzugsweise eine UV-LED-Lampe mit einem Emissionsspektrum von 365 bis 420 nm. Geeignete Lampen können in Form von Handgeräten eingesetzt werden, was eine einfache Handhabung und den mobilen Einsatz erlaubt.

In einer bevorzugten Ausführungsform umfasst das erfindungsgemäße Reparaturset vorzugsweise weiterhin ein Pflegemittel, vorzugsweise eines wie oben beschrieben, insbesondere eine Wachsmischung.

Das erfindungsgemäße Verfahren, insbesondere in Verbindung mit dem erfindungsgemäßen Reparaturset, erlaubt das schnelle und einfache Ausbessern von Fehl- und Schadstellen in Paneelen. Unter anderem dadurch, dass eine lange Trockenzeit entfällt, ermöglicht das erfindungsgemäße Verfahren die Ausbesserung im laufenden Betrieb, beispielsweise während des Produktionsprozesses, aber auch direkt auf der Baustelle, was bei herkömmlichen Verfahren in der Regel nicht möglich ist.

Die Erfindung wird anhand der folgenden Abbildungen näher erläutert, wobei diese keinesfalls als Einschränkung des Erfindungsgedanken zu verstehen sind.

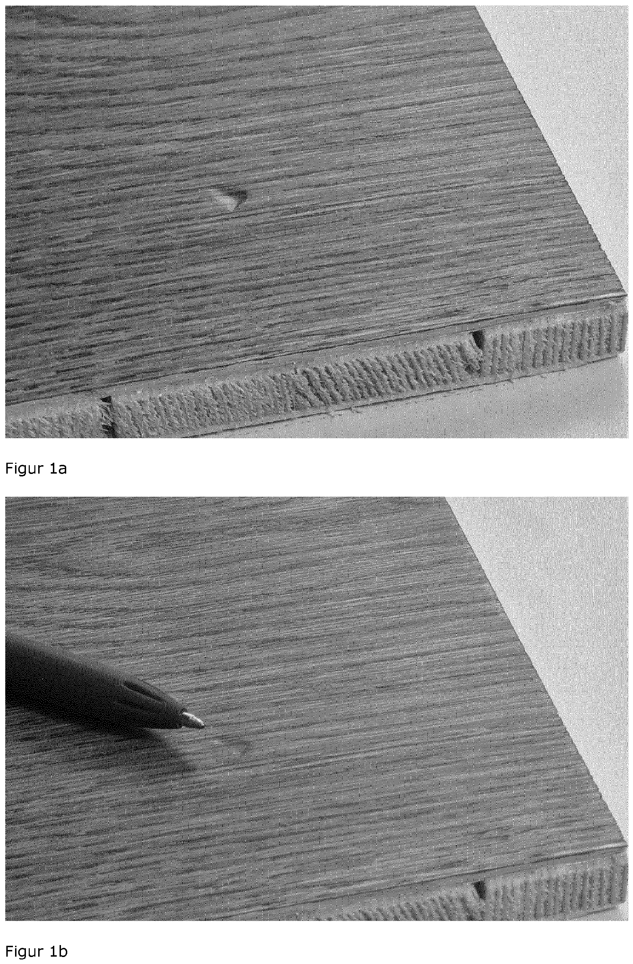

Figur 1a zeigt ein Paneel mit einer typischen Fehlstelle, wie sie beispielsweise durch einen Schlag oder einen herabfallenden Gegenstand verursacht werden kann. Dabei ist in der Regel auch die schützende Lackschicht beschädigt und weist feine Risse auf, durch die Wasser eindringen kann, was eine Ausweitung der Fehlstelle bewirkt.
Figur 1b zeigt die gleiche Fehlstelle nach Ausbesserung gemäß dem erfindungsgemäßen Verfahren. Wie ersichtlich, fügt sich die ausgebesserte Fehlstelle in das optische Gesamtbild ein.

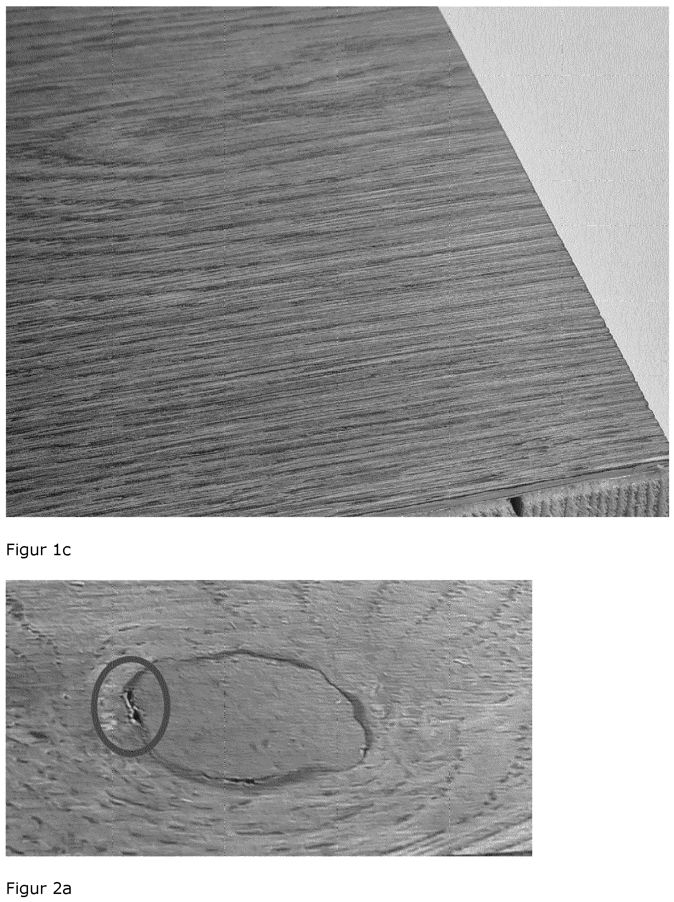

Figur 1c zeigt zu Vergleichszwecken das Paneel vor der Beschädigung. Wie durch einen Vergleich der Figuren 1b und 1c ersichtlich, weist die erfindungsgemäß ausgebesserter Fehlstelle optisch kaum Unterschiede zu dem Originalpaneel auf. Darüber hinaus sind die Oberflächen wieder gegen eindringendes Wasser und Verschmutzung geschützt. Die Oberfläche auf der Fehlstelle weist ähnliche Kratzfestigkeitseigenschaften wie die restliche Oberfläche auf.
Figur 2a zeigt eine typische Mikrofehlstelle natürlichen Ursprungs. Bei solchen Fehlstellen besteht in der Regel die Gefahr, dass Wasser in das Paneel eindringt und es so zu weitergehenden Beschädigungen des Paneels kommt.

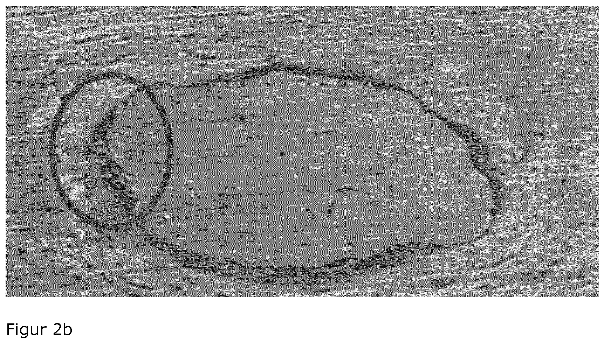

Figur 2b zeigt eine Aufnahme der gemäß dem erfindungsgemäßen Verfahren ausgebesserten Fehlstelle aus Figur 2a. Wie ein Vergleich der Bilder zeigt, ist optisch kein Unterschied erkennbar, durch die Ausbesserung kann darüber hinaus das Eindringen von Wasser und damit eine weitere Beschädigung des Paneels oder ungewünschte Verfärbungen verhindert werden.

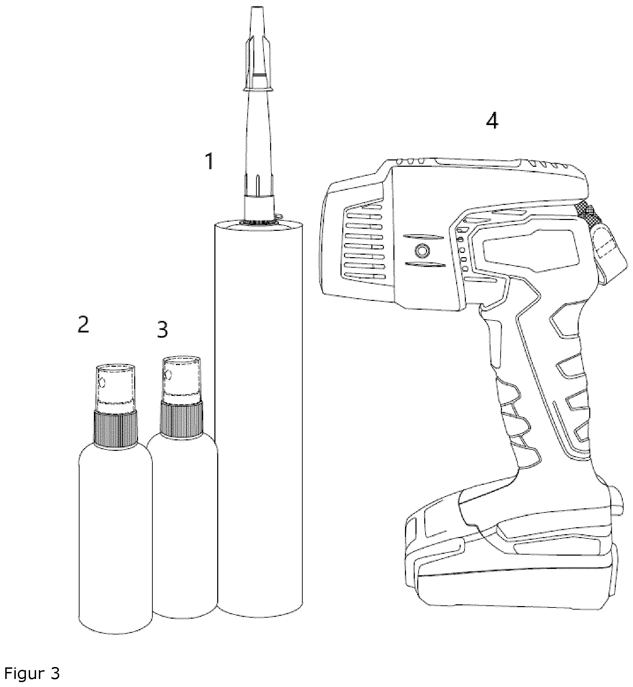

Figur 3 zeigt ein exemplarisches Reparaturset gemäß der vorliegenden Erfindung, das eine Reparaturspachtelmasse (1), ein Behandlungsmittel (2) und ein Pflegemittel (3) sowie eine LED-Handlampe als UV-Strahlungsquelle (4) umfasst.

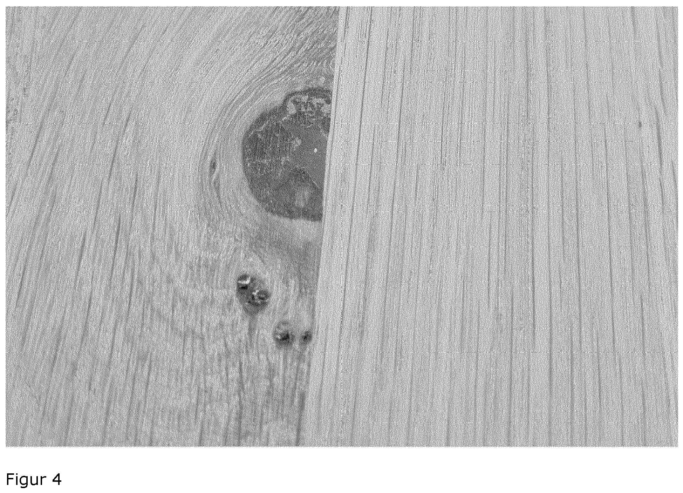

Figur 4 zeigt ein gemäß dem erfindungsgemäßen Verfahren gefülltes Astloch in einem noch unlackierten Paneel. Das Paneel mit der behandelten Fehlstelle kann in einem nächsten Schritt auf übliche Weise lackiert werden.

## Patentansprüche

1. Verfahren zur Ausbesserung von Fehlstellen in Paneelen, **dadurch gekennzeichnet, dass** die Fehlstelle mit einer Reparaturspachtelmasse gefolgt von einem Behandlungsmittel behandelt und die behandelte Fehlstelle mit UV-Strahlung bestrahlt wird.

2. Verfahren gemäß Anspruch 1, **dadurch gekennzeichnet, dass** die Reparaturspachtelmasse nach dem Auftragen mit einem Abziehmittel behandelt wird.

3. Verfahren gemäß wenigstens einem der vorangehenden Ansprüche, **dadurch gekennzeichnet, dass** das Verfahren die folgenden Schritte umfasst:
a) Aufbringen einer Reparaturspachtelmasse auf die Fehlstelle;
b-1) gegebenenfalls Aufbringen eines Abziehmittels auf die Reparaturspachtelmasse;
b-2) gegebenenfalls Nivellieren der Reparaturspachtelmasse;
c) Aufbringen eines Behandlungsmittels auf die Reparaturspachtelmasse; und
d) Bestrahlen der behandelten Fehlstelle mit UV-Strahlung.

4. Verfahren gemäß wenigstens einem der vorangehenden Ansprüche, **dadurch gekennzeichnet, dass** das Aufbringen des Behandlungsmittels und/oder des Abziehmittels mittels Sprühens erfolgt.

5. Verfahren gemäß wenigstens einem der vorangehenden Ansprüche, **dadurch gekennzeichnet, dass** es sich bei der Reparaturspachtelmasse um eine 1K-Spachtelmasse, vorzugsweise auf Polymerbasis mit Photoinitiator, handelt.

6. Verfahren gemäß Anspruch 5, **dadurch gekennzeichnet, dass** das Polymer ausgewählt ist aus der Gruppe der Epoxy-Acrylate, Polyurethane und Polyester-Acrylate sowie Mischungen hiervon.

7. Verfahren gemäß wenigstens einem der vorangehenden Ansprüche, **dadurch gekennzeichnet, dass** die Bestrahlung der behandelten Fehlstelle mittels LED-UV-Strahlung erfolgt.

8. Verfahren gemäß wenigstens einem der vorangehenden Ansprüche, **dadurch gekennzeichnet, dass** die Reparaturspachtelmasse weiterhin Verstärkungsfasern aufweist.

9. Verfahren gemäß wenigstens einem der vorangehenden Ansprüche, **dadurch gekennzeichnet, dass** das Behandlungsmittel Wasser, einen oder mehrere Alkohole und Reinigungsmittel, vorzugsweise Seife, umfasst.

10. Verfahren gemäß wenigstens einem der Ansprüche 2 bis 9, **dadurch gekennzeichnet, dass** das Abziehmittel Wasser, einen oder mehrere Alkohole und Reinigungsmittel, vorzugsweise Seife, umfasst.

11. Verfahren gemäß wenigstens einem der Ansprüche 2 bis 10, **dadurch gekennzeichnet, dass** das Behandlungsmittel auch als Abziehmittel verwendet wird.

12. Verfahren gemäß wenigstens einem der vorangehenden Ansprüche, **dadurch gekennzeichnet, dass** nach dem Bestrahlen weiterhin ein Pflegemittel aufgebracht wird, wobei es sich bei dem Pflegemittel vorzugsweise um eine Wachsmischung handelt.

13. Verfahren gemäß wenigstens einem der vorangehenden Ansprüche, **dadurch gekennzeichnet, dass** es sich bei dem Paneel um ein Paneel aus Holz, Kunststoff oder Faserverbundwerkstoff handelt.

14. Reparaturset zur Ausbesserung einer Fehlstelle in einem Paneel umfassend:
i) eine Reparaturspachtelmasse,
ii) ein Behandlungsmittel, und
iii) eine UV-Strahlungsquelle.

15. Reparaturset gemäß Anspruch 14, **dadurch gekennzeichnet, dass** das Reparaturset weiterhin ein Pflegemittel umfasst.
